(19) Europäisches Patentamt
European Patent Office
Office européen des brevets

(11) EP 0 575 203 B1

## (12) EUROPEAN PATENT SPECIFICATION

(45) Date of publication and mention
of the grant of the patent:
**16.04.1997 Bulletin 1997/16**

(51) Int Cl.$^6$: **H04B 7/08**

(21) Application number: **93304829.0**

(22) Date of filing: **21.06.1993**

(54) **Antenna switching circuit for a diversity receiver**

Antennenumschaltanordnung für einen Diversity-Empfänger

Circuit de commutation d'antenne pour un récepteur en diversité

(84) Designated Contracting States:
**DE FR GB**

(30) Priority: **19.06.1992 JP 161389/92**

(43) Date of publication of application:
**22.12.1993 Bulletin 1993/51**

(73) Proprietor: **PIONEER ELECTRONIC CORPORATION**
**Meguro-ku Tokyo (JP)**

(72) Inventors:
• **Fujino, Makoto,**
**c/o Pioneer Elec. Co. Kawagoe Wks.**
**Kawagoe-shi, Saitama (JP)**

• **Ohashi, Toru,**
**c/o Pioneer Elec. Co. Kawagoe Wks.**
**Kawagoe-shi, Saitama (JP)**

(74) Representative: **Tomlinson, Kerry John et al**
**Frank B. Dehn & Co.,**
**European Patent Attorneys,**
**179 Queen Victoria Street**
**London EC4V 4EL (GB)**

(56) References cited:
DE-A- 3 938 510          GB-A- 2 089 578
US-A- 4 525 869          US-A- 4 656 364

**Description**

The present invention relates to an antenna switching circuit, and more particularly to an antenna switching circuit for a diversity receiver.

Diversity receiver for use in a car is constructed in such a way that signals from an antenna for the VHF band and an antenna for both of the VHF and MF (medium frequency) bands are supplied to first and second antenna connecting terminals for receiving FM/AM broadcast waves, and the transmission of the received signals to two output terminals connected to RF input terminals of a tuner for the FM and AM broadcast bands, is respectively controlled through a switching element operated by a control signal.

In such an antenna switching circuit if, in the state of receiving AM broadcast waves, high-intensity input FM signals at frequencies close to each other are supplied from the second antenna connecting terminal to the switching element in an off state, a distorted frequency signal which corresponds to the difference between the two high-intensity FM signals, received and inputted thereto, occurs in the switching element due to an intermodulation. This distorted signal may leak to the output terminal to disturb the receiving condition of the AM receiver, thus causing the so-called radio interference.

The present invention has been made in view of the above problem, and an object of the invention is to provide an antenna switching circuit for a diversity receiver which is capable of maintaining a satisfactory receiving condition of an AM receiver, even if high-intensity FM signals at frequencies close to each other are inputted and supplied from respective antenna connecting terminals when receiving AM broadcast waves, without disturbing the receiving condition of the AM receiver.

The antenna switching circuit according to the present invention comprises at least two antenna connecting terminals for connection to respective receiving antennas; FM receiving signal supply means for supplying an FM receiver with signals received by the antennas and fed to said antenna connecting terminals, said signals being supplied to said FM signal supply means through a switching element; AM receiving signal supply means utilizing one of said antenna connecting terminals as an FM/AM common terminal to supply an AM receiver with signals received by an antenna and fed to the common terminal; and a low cut filter arranged between said common terminal and said switching element.

The antenna switching circuit of the present invention utilizes the low cut filter arranged between the antenna connecting terminal commonly used for FM/AM reception and a switching element of the FM receiving signal supply means corresponding thereto to prevent a distorted signal caused by an intermodulation of high-intensity FM receiving signals in each switching element in the FM receiving signal supply means from flowing into the AM receiver.

An embodiment of the present invention will now be described by way of example only and with reference to the accompanying drawings, in which:-

Fig. 1 is a circuit diagram showing an example of a conventional FM/AM antenna switching circuit for a diversity receiver for use in a car;

Fig. 2 is a circuit diagram showing an FM/AM antenna switching circuit for a diversity receiver for use in a car according to one embodiment of the present invention;

Fig. 3 is a diagram showing the frequency characteristic of the low cut filter in the circuit of Fig. 2; and

Fig. 4 is a diagram showing the noise level characteristic of an AM receiver with respect to an FM receiving level in the circuit of Fig. 2.

Prior to explaining an antenna switching circuit for a diversity receiver according to the present invention, description will be first made as to an example of a conventional FM/AM antenna switching circuit for a diversity receiver for use in a car.

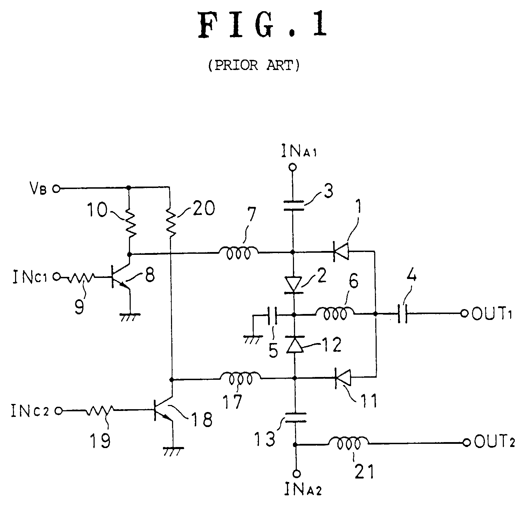

Referring to Fig. 1, the cathode of a switching diode 1 and the anode of a switching diode 2 are commonly connected to a first antenna connecting terminal $IN_{A1}$ through a capacitor 3. The anode of the diode 1 is connected to a first output terminal $OUT_1$ through a capacitor 4, while the cathode of the diode 2 is grounded through a capacitor 5 as well as is connected to an anode line of the diode 1 through an RF (Radio Frequency) signal blocking coil 6. A line to which connected are the cathode of the diode 1 and the anode of the diode 2 is connected to the collector of a transistor 8 through an RF signal blocking coil 7. The base of the transistor 8 is connected to a first control terminal $IN_{C1}$ through a resistor 9, and the emitter of the same is grounded. The collector of the transistor 8 is supplied with a voltage $V_B$ through a resistor 10.

Further, a similar circuit to the above is constituted of switching diodes 11, 12; a capacitor 13; an RF signal blocking coil 17; a transistor 18; and resistors 19 and 20, where the anode of the diode 11 is connected to the anode line of the diode 1, while the cathode of the diode 12 is connected to the cathode line of the diode 2. One end of the capacitor 13 is connected to a second antenna terminal $IN_{A2}$, and the base of the transistor 18 is connected to a second control terminal $IN_{C2}$ through the resistor 19.

The second antenna terminal $IN_{A2}$ is connected to a second output terminal $OUT_2$ through a coil 21.

In the conventional antenna switching circuit constructed as described above, the antenna connecting terminal $IN_{A1}$ is connected with an antenna for the VHF (Very High Frequency) band for receiving FM broadcast waves, while the antenna connecting terminal $IN_{A2}$ is connected with an antenna commonly used for the VHF and MF (Medium Frequency) bands for receiving FM/AM broadcast waves. The output terminal $OUT_1$ is connected to an RF input terminal for the FM broadcast waves of a receiver (not shown), while the output terminal $OUT_2$ is connected to an RF input terminal for AM broadcast waves, where the FM broadcast waves only is diversity-received.

When the FM broadcast waves is received, the voltage $V_B$ is supplied, and one of the control terminals $IN_{C1}$, $IN_{C2}$ is set to high level and the other one is set to low level. When the AM broadcast waves is received, the supply of the voltage $V_B$ is stopped.

When the control terminal $IN_{C1}$ is set to high level and the control terminal $IN_{C2}$ to low level in an FM broadcast wave receiving condition, the transistor 8 is turned on, and the transistor 18 is turned off. In this event, a current generated by the supplied voltage $V_B$ flows through the transistor 8 to the ground as well as flows, as a bias current, through the resistor 20, the coil 17, the diode 12, the coil 6, the diode 1, the coil 7 and the transistor 8, to the ground. Thus, the diodes 1, 12 are turned on, while the diode 2, 11 are turned off, so that an RF signal from the antenna connecting terminal $IN_{A1}$ is supplied to the output terminal $OUT_1$ through the capacitor 3, the diode 1 and the capacitor 4, while an RF signal from the antenna connecting terminal $IN_{A2}$ flows through the capacitor 13, the diode 12, and the capacitor 5, into the ground. Consequently, the RF signal from the antenna connected to the antenna connecting terminal $IN_{A1}$ is supplied to the receiver.

On the other hand, when the control terminal $IN_{C1}$ is set to low level, and the control terminal $IN_{C2}$ to high level, the transistor 8 is turned off, while the transistor 18 is turned on. In this event, a current generated by the supplied voltage $V_B$ flows through the resistor 20 and the transistor 18 to the ground as well as through the resistor 10, the coil 7, the diode 2, the coil 6, the diode 11, the coil 17 and the transistor 18 to the ground as a bias current. Thus, the diodes 1, 12 are turned off, and the diodes 2, 11 are turned on, so that the RF signal from the antenna connecting terminal $IN_{A2}$ is supplied through the capacitor 13, the diode 11 and the capacitor 4 to the output terminal $OUT_1$, while the RF signal from the antenna connecting terminal $IN_{A1}$ flows through the capacitor 3, the diode 2 and the capacitor 5 to the ground. For this reason, the RF signal from the antenna connected to the antenna connecting terminal $IN_{A2}$ is supplied to the receiver.

When receiving the AM broadcast waves, an RF signal from the antenna connecting terminal $IN_{A2}$ is supplied to the output terminal $OUT_2$ through the coil 21. It should be noted that while the coil 21 lets RF signals in the MF band such as the AM broadcast wave band pass therethrough smoothly, it also serves as a large resistance against RF signals in the VHF band such as the FM broadcast wave band, to prevent them from passing therethrough.

In the antenna switching circuit configured as described above, the supply of the voltage $V_B$ is blocked in the AM broadcast wave receiving condition. In this event, if the diode 12 in off state is supplied with high-intensity input FM signals at frequencies close to each other received from the second antenna connecting terminal $IN_{A2}$, a distorted signal at a frequency equal to the difference in frequency between the two supplied high-intensity input FM signals will be generated in the diode 12 due to an intermodulation. This distorted signal may pass through the capacitor 13 to leak to the terminal $OUT_2$, which disturbs the receiving condition of the AM receiver, thus causing the so-called radio interference.

Now, one embodiment of the present invention will hereinafter be described in detail with reference to the accompanying drawings.

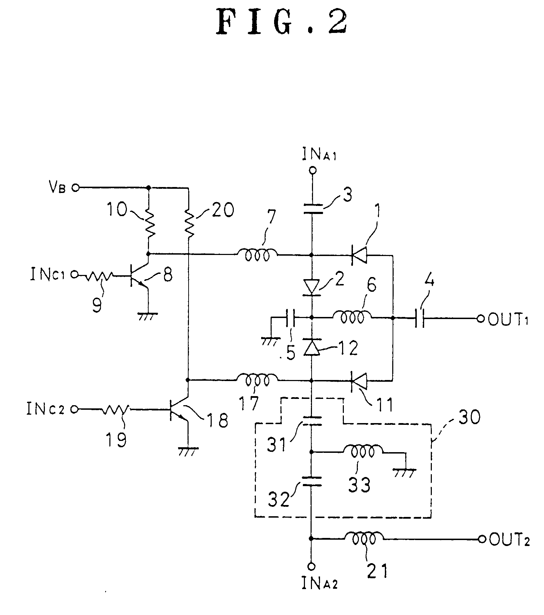

Fig. 2 is a block diagram showing an FM/AM antenna switching circuit for a diversity receiver for use in a car, according to one embodiment of the present invention, where parts similar to those in Fig. 1 are designated the same reference numerals.

Referring to Fig. 2, the characteristic portion of this embodiment is formed by a passive low cut filter (hereinafter called the LCF 30) arranged between the cathode of a diode 11 and a second antenna connecting terminal $IN_{A2}$. An RF signal within the AM broadcast wave band is introduced from the second antenna connecting terminal $IN_{A2}$ through a coil 21 to a terminal $OUT_2$. The LCF 30 is configured in a so-called T-shaped circuit by a capacitor 31 connected to the cathode of the diode 11, a capacitor 32 connected to the second antenna connecting terminal $IN_{A2}$, and a coil 33, one end of which is grounded.

Generally, when a voltage $\underline{e}$ is applied across a diode, and a current $\underline{i}$ is generated in consequence, the diode has non-linearity characteristics, where the following equation is assumed to stand:

$$i = a_0 + a_1 e + a_2 e^2 + a_3 e^3 + \ldots \ldots \tag{1}$$

With the equation (1), when the diode is with received high-intensity input signals at frequencies close to each other supplied from the second antenna connecting terminal $IN_{A2}$, the voltages of which are represented by $e_1 = E_1 \sin\theta_1$ and $e_2 = E_2 \sin\theta_2$, respectively, the current $\underline{i}$, as represented by the following equation (2), is generated in the diode, where $\underline{e}$ is substituted by $(e_1 + e_2)$:

$$i = a_0 + a_1(e_1 + e_2) + a_2(e_1 + e_2)^2 + a_3(e_1 + e_2)^3 + \ldots \ldots \tag{2}$$

Paying attention to the second-order term of the equation (2), the following equation (3) is derived:

$$a_2(e_1 + e_2)^2$$

$$= a_2(E_1 \sin\theta_1 + E_2 \sin\theta_2)^2$$

$$= a_2(E_1^2 \sin^2\theta_1 + E_2^2 \sin^2\theta_2) + 2a_2 E_1 E_2 \sin\theta_1 \sin\theta_2$$

$$= (1/2)a_2(E_1^2 + E_2^2)$$

$$- (1/2)a_2(E_1^2 \sin 2\theta_1 + E_2^2 \sin 2\theta_2)$$

$$+ a_2 E_1 E_2 \{\cos(\theta_1 - \theta_2) - \cos(\theta_1 + \theta_2)\} \tag{3}$$

where $a_2 E_1 E_2 \cos(\theta_1 - \theta_2)$ represents second-order intermodulation components.

In the equation (3), $\theta_1 = 2\pi f_1 t$ and $\theta_2 = 2\pi f_2 t$ stand. Assuming, for example, that one of the received high-intensity input signals has the frequency $f_1$ at 90 Mhz and the other has the frequency $f_2$ at 91 MHz, the $a_2 E_1 E_2 \cos(\theta_1 - \theta_2)$ components have frequency components equal to 1 MHz which is the difference in frequency between the two received signals, whereby a (distorted) signal occurs in the MF band belonging to the AM band.

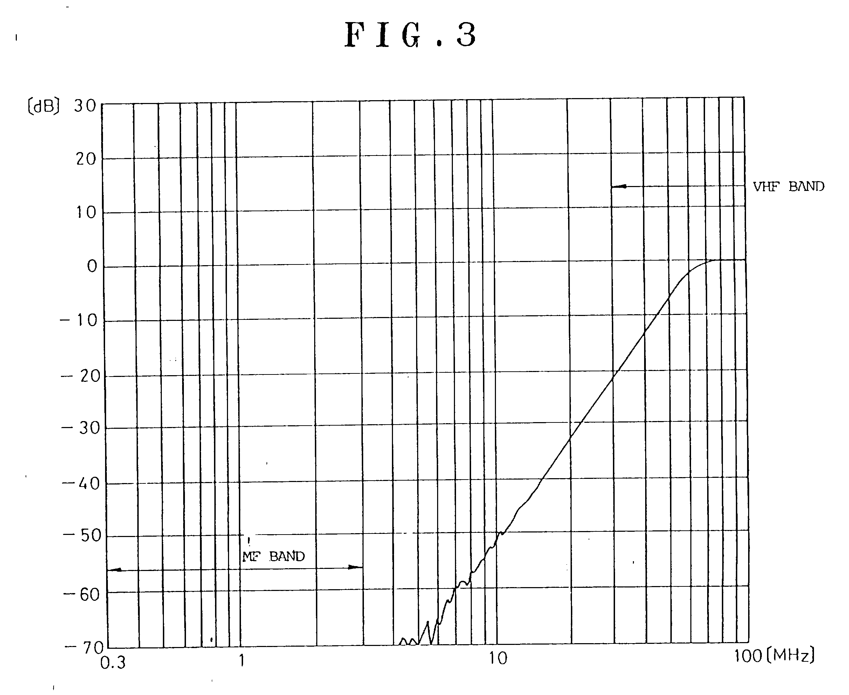

In this embodiment, the LCF 30 prevents the above distorted signal from flowing in the output terminal $OUT_2$. Also, the LCF 30 must pass therethrough receiving signals in the VHF band, falling within the FM band, from the second antenna connecting terminal $IN_{A2}$ for diversity reception when receiving the FM broadcast waves. Specifically, the LCF 30 has the frequency characteristics to block input signals in the MF band as shown in Fig. 3 and pass therethrough input signals in the VHF band belonging to the FM band. Incidentally, it is desirable for the frequency characteristics to have a slope of approximately 18 dB/oct in a region from the blocked band to the passible band. This embodiment realizes this condition by providing the capacitors 31, 32 with a capacitance of 22 pF and the coil 33 with an inductance of 0.15 µH. It goes without saying that there are a variety of filters, other than the above, which satisfy the characteristics equivalent thereto.

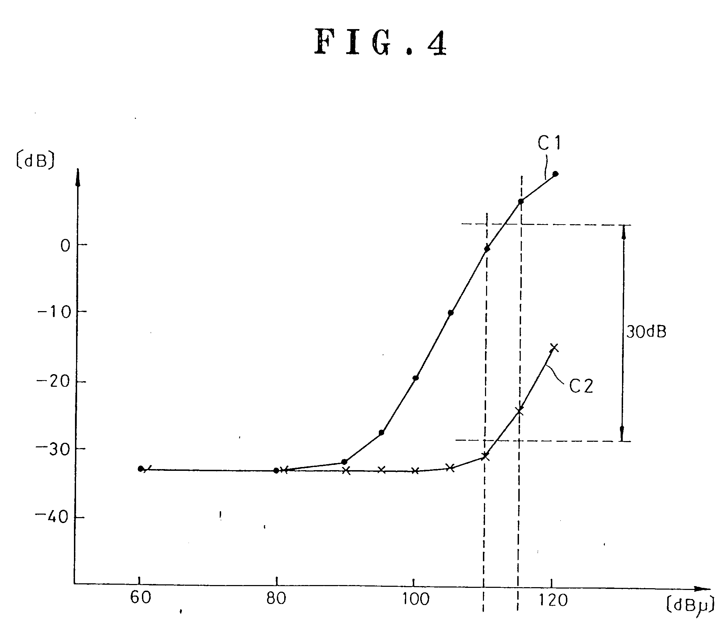

Comparing a circuit provided with the LCF as described above with a circuit without the LCF, a remarkable difference in noise level is present in the AM receiver as shown in Fig. 4. In Fig. 4, the abscissa represents the reception level (dBµ) of FM broadcast wave waves, and the ordinate represents the noise level (dB) in the AM receiver. As is apparent from the characteristic diagram of Fig. 4, a curve C1, representing the case where the LCF 30 is not provided, shows that the noise level of the AM receiver rises at the FM broadcast wave reception level exceeding 90 dBµ and then gradually becomes larger, while a curve C2, representing the case where the LCF 30 is provided, shows that the noise level of the AM receiver merely rises at the FM broadcast wave reception level exceeding 100 dBµ and then gradually becomes larger. Further, with the FM broadcast wave reception level in the vicinity of 110 dBµ, there is 30 dB of difference in noise level between the case where the LCF 30 is provided and the case where it is not provided, thus clearly showing the advantage of the LCF 30.

Although in the embodiment described above, the LCF 30 is formed by two capacitors and a coil, the configuration is not of course limited to this, and a variety of configuring methods may also be employed.

As described above in detail, the antenna switching circuit for a diversity receiver according to the present invention has a low cut filter, arranged between an antenna connecting terminal commonly used for the AM/FM broadcast wave and a switching element of an FM receiving signal supply means corresponding thereto, which prevents a distorted signal generated due to an intermodulation of received high-intensity input FM signals in each switching element in the FM receiving signal supply means from flowing to an AM receiver. Therefore, even if received high-intensity input FM signals at frequencies close to each other are supplied through each antenna connecting terminal while receiving the AM broadcast wave, the AM receiver can be maintained in a favorable receiving condition and will never be disturbed by such FM receiving signals. Also advantageous is that the present invention can be realized only by adding a LCF which is a relatively simple means as an electric circuit.

## Claims

1. An antenna switching circuit for a diversity receiver comprising:

   at least two antenna connecting terminals ($IN_{A1}$, $IN_{A2}$) for connection to respective receiving antennas;
   FM receiving signal supply means ($OUT_1$) for supplying an FM receiver with signals received by the antennas and fed to said antenna connecting terminals, said signals being supplied to said FM signal supply means through a switching element (1-12, 17-20);
   AM receiving signal supply means ($OUT_2$) utilizing one of said antenna connecting terminals ($IN_{A2}$) as an FM/AM common terminal to supply an AM receiver with signals received by an antenna and fed to the common terminal; and

   characterised by
   a low cut filter (30) arranged between said common terminal ($IN_{A2}$) and said switching element.

2. An antenna switching circuit according to claim 1, wherein said low cut filter (30) is a passive filter which has a characteristic to block input signals in the MF band and pass therethrough input signals in the VHF band.

## Patentansprüche

1. Antennenschaltanordnung für einen Diversity-Empfänger, umfassend:

   wenigstens zwei Antennenanschlüsse ($IN_{A1}$, $IN_{A2}$) zur Verbindung mit jeweiligen Empfangsantennen,
   FM-Empfangssignalzufuhrmittel ($OUT_1$) zum Zuführen von Signalen, die von den Antennen empfangen werden und zu den Antennenanschlüssen geleitet werden, an einen FM-Empfänger, wobei die Signale den FM-Signalzufuhrmitteln über ein Schaltelement (1 - 12, 17 - 20) zugeführt werden,
   AM-Empfangssignalzufuhrmittel ($OUT_2$), die einen der Antennenanschlüsse ($IN_{A2}$) als gemeinsamen FM/AM-Anschluß benutzen, um einem AM-Empfänger Signale zuzuführen, die von einer Antenne empfangen werden und zu dem gemeinsamen Anschluß geleitet werden,

   gekennzeichnet durch ein Hochpaßfilter (30), das zwischen dem gemeinsamen Anschluß ($IN_{A2}$) und dem Schaltelement angeordnet ist.

2. Antennenschaltanordnung nach Anspruch 1, bei der das Hochpaßfilter (30) ein passives Filter ist, das eine Charakteristik hat, Eingangssignale im MF-Band zu blokkieren und Eingangssignale im VHF-Band durchzulassen.

## Revendications

1. Circuit de commutation d'antenne pour un récepteur en diversité comprenant :

   au moins deux bornes de connexion d'antenne ($IN_{A1}$, $IN_{A2}$) pour la connexion d'antennes de réception respectives ;
   des moyens pour fournir un signal de réception modulé en fréquence ($OUT_1$) pour fournir à un récepteur à modulation de fréquence des signaux reçus par les antennes et délivrés auxdites bornes de raccordement d'antenne, lesdits signaux étant fournis auxdits moyens pour fournir un signal modulé en fréquence par l'intermédiaire d'un élément de commutation (1-12,17-20) ;
   des moyens pour fournir un signal de réception en modulation d'amplitude ($OUT_2$) utilisant une desdites bornes de raccordement d'antenne ($IN_{A2}$) comme borne commune en modulation de fréquence/modulation d'amplitude pour fournir à un récepteur en modulation d'amplitude des signaux reçus par une antenne et fournis à ladite borne commune, caractérisé en ce qu'il comporte un circuit à fréquence de coupure basse (30) disposé entre ladite borne commune ($IN_{A2}$) et ledit élément de commutation.

2. Circuit de commutation d'antenne selon la revendication 1, dans lequel ledit filtre à fréquence de coupure basse (30) est un filtre passif qui comporte une caractéristique consistant à bloquer des signaux d'entrée dans la bande de modulation de fréquence et à laisser passer des signaux d'entrée dans la bande des très hautes fréquences.

EP 0 575 203 B1

# FIG.1

(PRIOR ART)

6

# FIG.2

# FIG. 3

FIG. 4